# EUROPÄISCHE PATENTSCHRIFT

(11) **EP 1 848 570 B1**
(45) Veröffentlichungstag und Bekanntmachung des Hinweises auf die Patenterteilung: **06.11.2019**
(21) Anmeldenummer: 05821706.8
(22) Anmeldetag: 12.12.2005
(51) Int. Cl.: B25F 5/02, H01M 10/00

(54) **ELEKTRISCHE HANDWERKZEUGMASCHINE**
ELECTRIC HAND TOOL
MACHINE-OUTIL MANUELLE ELECTRIQUE

(30) Priorität: 07.02.2005 DE 102005005553
(43) Veröffentlichungstag der Anmeldung: 31.10.2007
(73) Patentinhaber: ROBERT BOSCH GMBH, 70442 Stuttgart (DE)
(72) Erfinder: WUENSCH, Steffen, 71088 Holzgerlingen (DE); HIRSCHBURGER, Wolfgang, Thurston IP31 2QY (GB)
(86) Internationale Anmeldenummer: PCT/EP2005/056685
(87) Internationale Veröffentlichungsnummer: WO 2006/081894

(56) Entgegenhaltungen:
- EP-A- 1 143 549
- EP-A- 1 266 725
- DE-A1- 3 502 449
- DE-A1- 10 134 000
- DE-A1- 19 916 099
- FR-A- 2 830 687
- GB-A- 2 380 963
- US-A- 5 796 188
- US-A- 6 139 359
- US-A1- 2004 017 177
- US-A1- 2004 175 610
- US-B1- 6 257 351
- US-B1- 6 630 270

## Beschreibung

### Stand der Technik

Die Erfindung geht aus von einer elektrischen Handwerkzeugmaschine nach dem Oberbegriff des Anspruchs 1.

Bekannte elektrische Handwerkzeugmaschinen in der Leistungsklasse zwischen 2,4V bis 3,6V, wie sie beispielsweise aus der EP 1 066 930 bekannt sind, haben einen aus einer oder mehreren NiCd-Zellen zusammengesetzten Akkumulator, nachfolgend kurz Akku genannt, als Energiespeicher für den elektromotorischen Antrieb einer mit einem Werkzeug verbundenen Arbeitsspindel. Die im Handel erhältlichen NiCd-Zellen haben üblicherweise Zylinder- oder Quaderform und sind in einen hohlen Akkuraum eingeschoben, der am hinteren Ende des stabförmigen Maschinengehäuses vorgehalten ist. Andere Beispiele sind aus der US2004017177A1, US200417561 0A1, EP1143549A, DE19916099A1 und GB2380963A bekannt.

### Vorteile der Erfindung

Die erfindungsgemäße elektrische Handwerkzeugmaschine mit den Merkmalen des Anspruchs 1 hat hinsichtlich des Akkus den Vorteil, aufgrund der metallisierten Kunststofffolien als Energieträger neben einer hohen Energiedichte auch eine flexible Form zu besitzen, die es erlaubt, den Lithium-Polymer-Akku in vorhandenen Hohl- oder Leerräumen im Maschinengehäuse und/oder Griff und/oder einem am Maschinengehäuse bzw. Griff befestigten oder befestigbaren separaten Gehäuse, die recht unterschiedliche Raumformen aufweisen, mit optimaler Hohl- oder Leerraumausfüllung unterzubringen. Dadurch braucht für den Akku kein gesondertes Bauvolumen im Maschinengehäuse und/oder Griff und/oder einem am Maschinengehäuse bzw. Griff befestigten oder befestigbaren separaten Gehäuse vorgehalten zu werden. Vielmehr lässt sich der Akku ganz oder in Teilen in konstruktiv bedingt anfallende Hohl- und Leerräume einlegen, die anderweitig nicht genutzt werden können. Dadurch ergibt sich eine kompakte Bauweise der Handwerkzeugmaschine, was diese handlicher macht und auch die Kosten für Verpackung und Transport senken hilft. Darüber hinaus kann eine für einen Kabelanschluss konzipierte Handwerkzeugmaschine problemlos zu einer akkubetriebenen Handwerkzeugmaschine umgestellt werden, ohne dass konstruktive Veränderungen am Maschinengehäuse und/oder Griff und/oder einem am Maschinengehäuse bzw. Griff befestigten oder befestigbaren separaten Gehäuse zur Unterbringung des Akkumulators vorgenommen werden müssen. Als Standardzellen bezeichnete Akku-Elemente für einen Lithium-Polymer-Akku sind in rechteckiger und runder Form in Dicken ab 3 mm im Handel erhältlich und können durch Pressen in Formwerkzeugen in eine gewünschte Form gebracht werden.

Durch die in den weiteren Ansprüchen aufgeführten Maßnahmen sind vorteilhafte Weiterbildungen und Verbesserungen der im Anspruch 1 angegebenen elektrischen Handwerkzeugmaschine möglich.

Gemäß einer vorteilhaften Ausführungsform der Erfindung weist der mindestens eine Lithium-Polymer-Akku mindestens ein Akku-Element auf, das als Streifen, Band oder Platte ausgebildet ist und eine ebene oder gebogene oder sphärisch gekrümmte, z. B. kugelabschnittförmig gekrümmte, Form aufweist. Dabei ist das mindestens eine Akku-Element oder sind die mehreren zum Akku zusammengesetzten Akku-Elemente an die den Akku aufnehmenden Aufnahmeräume im Maschinengehäuse und/oder im Griff und/oder einem am Maschinengehäuse bzw. Griff befestigten oder befestigbaren separaten Gehäuse maß- und/oder formangepasst. Zwecks zumindest kurzzeitiger Verfügbarkeit hoher Speiseströme für den elektrischen Antrieb der Handwerkzeugmaschine sind die Akku-Elemente eines Lithium-Polymer-Akkus elektrisch parallel geschaltet. Zur Erzielung einer ausreichend hohen Betriebsspannung sind mehrere Lithium-Polymer-Akkus, die einen unterschiedlichen Zellen- oder Akku-Element-Aufbau aufweisen können, im Maschinengehäuse und/oder Griff und/oder einem am Maschinengehäuse bzw. Griff befestigten oder befestigbaren separaten Gehäuse verteilt angeordnet und elektrisch in Reihe geschaltet.

Gemäß einer vorteilhaften Ausführungsform der Erfindung sind die Lithium-Polymer-Akkus in ihren sie aufnehmenden Hohl- oder Leerräumen im Maschinengehäuse und/oder Griff und/oder einem am Maschinengehäuse bzw. Griff befestigten oder befestigbaren separaten Gehäuse vorzugsweise mittels Klemmen, Verstemmen, Verschrauben oder Klettverbindungen befestigt, können aber auch durch Kleben, Vergießen und dgl. in den Hohl- oder Leerräumen festgelegt werden.

Gemäß alternativen Ausführungsformen der Erfindung ist die erfindungsgemäß mit einem oder mehreren Lithium-Polymer-Akkus ausgestattete elektrische Handwerkzeugmaschine z. B. eine Handhobelmaschine oder eine schleifende Maschine, wie ein Schwing-, Exzenter-, Delta- oder Linearschleifer, oder ein Gartengerät oder ein Tacker oder eine Stichsäge, eine Feinschnittsäge, eine Laubsäge oder ein Schaber. Allen diesen Handwerkzeugmaschinen ist gemeinsam, dass sie keine hohe Spitzenlast vom Akku abfordern. Die erfindungsgemäß mit Lithium-Polymer-Akkus ausgestattete elektrische Handwerkzeugmaschine kann aber auch als Bohr- und Schlagbohrmaschine, leichter Hammer, Schrauber od. dgl. ausgebildet sein, wobei vorzugsweise in dem Antriebsstrang einer solchen Maschine eine drehmomentabhängige Kupplung zum Schutz vor Überlast vorgesehen ist.

### Zeichnung

Die Erfindung ist anhand von in der Zeichnung dargestellten Ausführungsbeispielen einer elektrischen Handwerkzeugmaschine in der nachfolgenden Beschreibung näher erläutert. Es zeigen:
- Fig. 1: eine Seitenansicht eines Exzenterschleifers mit teilweise aufgeschnittenem Maschinengehäuse,
- Fig. 2: eine Seitenansicht eines Schwingschleifers bei einer abgenommenen Gehäuseschale des zweischaligen Maschinengehäuses,
- Fig. 3: eine Seitenansicht eines Schraubers bei einer abgenommenen Gehäuseschale des zweischaligen Maschinengehäuses,
- Fig. 4: einen Schnitt längs der Linie IV - IV in Fig. 3,
- Fig. 5: eine Seitenansicht einer Stichsäge bei einer abgenommenen Gehäuseschale des zweischaligen Maschinengehäuses,
- Fig. 6: einen Schnitt längs der Linie VI - VI in Fig. 5,
- Fig. 7: eine Seitenansicht eines Handhobels bei einer abgenommenen Gehäuseschale des zweischaligen Maschinengehäuses,
- Fig. 8: einen Schnitt längs der Linie VIII - VIII in Fig. 7,
- Fig. 9: einen Schnitt längs der Linie IX - IX in Fig. 7,
- Fig. 10: einen Schnitt längs der Linie X - X in Fig. 9.

### Beschreibung der Ausführungsbeispiele

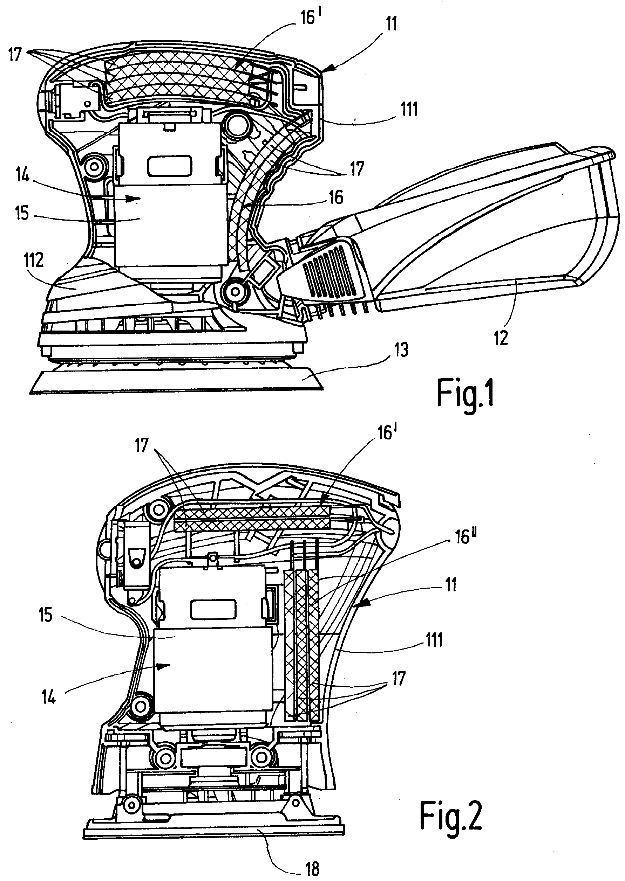

Die in Fig. 1 als Exzenterschleifer ausgebildete elektrische Handwerkzeugmaschine weist ein Maschinengehäuse 11 und einen Griff 12 zum Handhaben und Führen der Maschine auf. Das Maschinengehäuse 11 ist aus zwei Gehäuseschalen 111 und 112 zusammengesetzt, wobei in Fig. 1 die vordere Gehäuseschale 112 weitgehend aufgeschnitten dargestellt ist, so dass der Innenraum des Maschinengehäuses 11 zu sehen ist. Am unteren Ende des Maschinengehäuses 11 befindet sich ein Schleifteller 13, der über ein Exzentergetriebe von einem Elektromotor 14 antreibbar ist. Der Elektromotor 14 ist in einem Motorgehäuse 15 aufgenommen, das im Maschinengehäuse 11 zwischen an den Gehäuseschalen 111 und 112 ausgebildeten Rippen abgestützt und befestigt ist. Der Elektromotor 14 bezieht seine elektrische Energie aus mindestens einem Lithium-Polymer-Akku 16. Ein solcher Lithium-Polymer-Akku 16, im folgenden kurz Lipo-Akku 16 genannt, besteht aus metallisierten Kunststofffolien und einem gelartigen Polymerelektrolyten. Der einzelne Lipo-Akku 16 lässt sich aus flachen rechteckigen oder runden Akku-Elementen 17 zusammensetzen, die als sog. Standardzellen in handelsüblichen Dicken von z. B. ab 3mm aufwärts erhältlich sind. Mehrere dieser Akku-Elemente 17 können elektrisch parallel oder in Reihe geschaltet werden und liefern einen vergleichsweise gleich großen Strom wie herkömmliche NiCd-Akkumulatoren. Im Ausführungsbeispiel der Fig. 1 sind im Maschinengehäuse 11 beispielhaft mehrere Lipo-Akkus 16 angeordnet, wobei ein Lipo-Akku 16' im oberen Teil des Maschinengehäuses 11 und ein Lipo-Akku 16" im seitlichen Bereich des Motorgehäuses 15 angeordnet ist. Jeder der beiden Lipo-Akkus 16 ist in seinen Maßen und in seiner Form an den den jeweiligen Lipo-Akku 16 aufnehmenden Aufnahmeraum angepasst. Der obere Lipo-Akku 16' besitzt vier aufeinanderliegende Akku-Elemente 17, die eine der Kontur der oberen Gehäusewand entsprechende, bogenförmige Krümmung aufweisen. Alle vier Akku-Elemente 17 haben gleiche Abmessungen. Es ist aber möglich, z.B. das oberste Akku-Element 17 größer auszubilden, um den in Fig. 1 im linken oberen Bereich des Maschinengehäuses 11 noch vorhandenen Hohlraum auszufüllen. Der im Maschinengehäuse 11 seitlich angeordnete Lipo-Akku 16" ist aus zwei Akku-Elementen 17 zusammengesetzt, die ebenfalls quer zu ihrer Längsachse gewölbt oder gebogen sind und eine solche Krümmung aufweisen, dass das äußere Akku-Element 17 plan an der seitlichen Gehäusewand des Maschinengehäuses 11 anliegt. In beiden Lipo-Akkus 16 sind die Akku-Elemente 17 als rechteckige Platten ausgebildet, die quer zu ihrer Längsachse gebogen sind. Alternativ können diese Akku-Elemente 17 auch als Streifen oder als Bänder ausgeführt sein.

Die in Fig. 2 in Seitenansicht zu sehende, elektrische Handwerkzeugmaschine ist als Schwingschleifer ausgebildet und weist wiederum ein zweischaliges Maschinengehäuses 11 auf, von dem in Fig. 2 die vordere Gehäuseschale 112 abgenommen und somit nur die hintere Gehäuseschale 111 zu sehen ist. Die am unteren Ende des Maschinengehäuses 11 vorhandene Schleifplatte 18 ist über ein Getriebe von einem Elektromotor 14 in eine hin- und hergehende Schwingbewegung antreibbar. Der Elektromotor 14 ist in einem Motorgehäuse 15 aufgenommen, das wiederum im Maschinengehäuse 11 befestigt ist. Für die Stromversorgung sind zwei Lipo-Akkus 16 vorgesehen, von denen der Lipo-Akku 16' im oberen Teil des Maschinengehäuses 11 quer zur Motorachse waagerecht und der Lipo-Akku 16 parallel zur Motorachse, also vertikal, angeordnet ist. Der obere Lipo-Akku 16' weist zwei Akku-Elemente 17 und der im Maschinengehäuse 11 seitlich angeordnete Lipo-Akku 16" weist drei Akku-Elemente 17 auf, die jeweils parallelgeschaltet sind. Jedes Akku-Element 17 ist als rechteckförmige, ebene Platte ausgeführt. Die Platten sind voneinander beabstandet zu einem den Lipo-Akku 16 bildenden Plattenstapel zusammengefasst. Der Abstand zwischen den einzelnen Akku-Elementen 17 bzw. Platten dient zur Luftdurchströmung durch die von dem Motorlüfter angesaugte Kühlluft und damit der Kühlung der Lipo-Akkus 16.

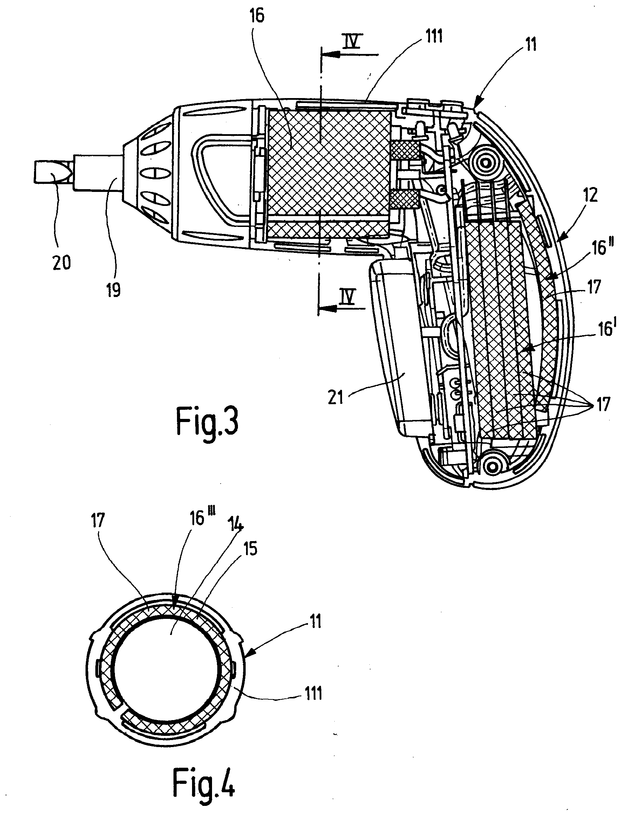

Die in Fig. 3 in Seitenansicht dargestellte elektrische Handwerkzeugmaschine ist als Schrauber ausgeführt und weist wiederum ein zweischaliges Maschinengehäuse 11 auf, an dem ein pistolenartig geformter Griff 12 einstückig angeformt ist. Von dem Maschinengehäuse 11 ist in Fig. 3 lediglich die hintere Gehäuseschale 111 zu sehen. Der Schrauber weist eine im Maschinengehäuse 11 gelagerte Arbeitsspindel 19 auf, an der ein Schraubwerkzeug 20 angesetzt ist.

Die Arbeitsspindel 19 wird von einem Elektromotor 14 angetrieben, von dem in Fig. 4 lediglich das Motorgehäuse 15 dargestellt ist, das im Maschinengehäuse 11 axial und radial unverschieblich festgelegt ist. Zur Stromversorgung sind wiederum mehrere Lipo-Akkus 16 vorgesehen. Im Stromkreis zwischen den Lipo-Akkus 16 und dem Elektromotor 14 ist ein Ein-/Ausschalter angeordnet, der über eine am Griff 12 angeordnete Betätigungstaste 21 betätigbar ist. Im Schrauber sind beispielhaft drei im Maschinengehäuse 11 und im Pistolengriff 12 verteilt angeordnete Lipo-Akkus 16', 16" und 16''', die elektrisch in Reihe geschaltet sind, vorhanden. Der Lipo-Aku 16' ist aus vier als ebene Platte ausgebildeten Akku-Elementen 17, die parallel geschaltet sind, zu einem Stapel zusammengesetzt, wobei die Platten unmittelbar aufeinanderliegen. Der Lipo-Akku 16" wird von einem einzigen Akku-Element 17 gebildet, das als gebogene Platte ausgeführt ist und in seiner gebogenen Form der Innenkontur des Pistolengriffs 12 angepasst ist. Alternativ kann das den Lipo-Akku 16" bildende Akku-Element 17 mit in den Lipo-Akku 16' einbezogen werden, indem es elektrisch parallel zu dem Plattenstapel des Lipo-Akkus 16' geschaltet wird. In diesem Fall sind im Schrauber nur noch zwei Lipo-Akkus 16 vorhanden, die in Reihe geschaltet sind. Der dritte Lipo-Akku 16''' besteht aus einem kreisringförmig gebogenen Akku-Element 17, das das Motorgehäuse 15 umschließt (Fig. 4) und auf diesem befestigt ist. Anstelle der Befestigung auf dem Motorgehäuse 15 kann das das Motorgehäuse 15 konzentrisch umschließende Akku-Element 17 auch am Maschinengehäuse 11 befestigt sein. Alternativ kann der Lipo-Akku 16''' auch aus mehreren Akku-Elementen 17 zusammengesetzt werden, die in Umfangsrichtung des Motorgehäuses 15 aneinandergesetzt sind. Jedes Akku-Element 17 stellt damit ein Schalensegment dar, das um seine Längsachse mit einem Krümmungsradius gebogen ist, der dem halben Außendurchmesser des Motorgehäuses 15 entspricht oder wenig größer ist. Alternativ kann der Lipo-Akku 16'" auch als Schlauch oder als in Form einer Schraubenfeder auf das Motorgehäuse aufgewickeltes Band ausgeführt werden. Bei der Schlauchausführung ist es vorteilhaft, die Außen- und/oder Innenwand des Schlauchs mit einer Schutzschicht gegen mechanische Beschädigung und/oder mit einer Gleitschicht zu versehen.

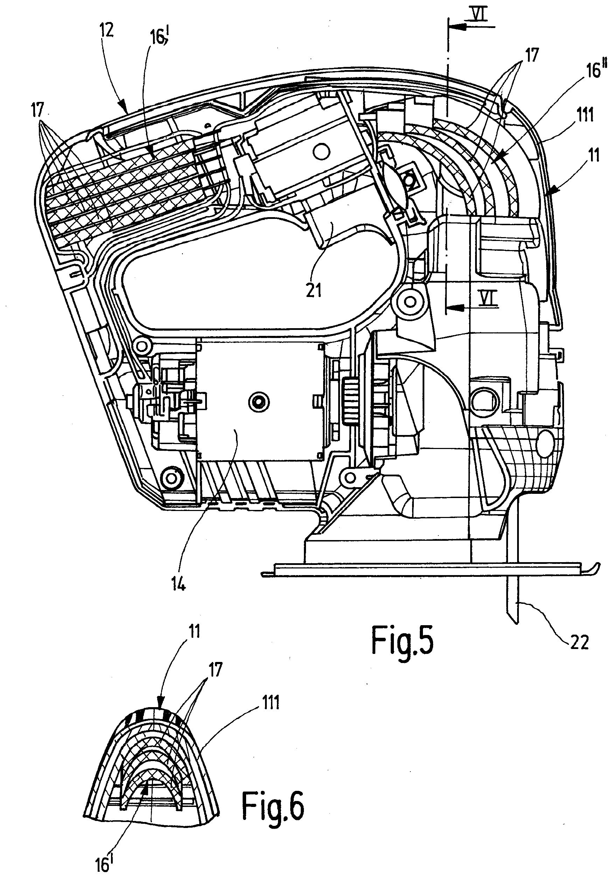

Bei dem in Fig. 5 dargestellten Ausführungsbeispiel ist die Handwerkzeugmaschine als Stichsäge ausgeführt. Sie weist wiederum ein zweischaliges Maschinengehäuse 11 auf, von dem in Fig. 5 nach Abnahme der vorderen Gehäuseschale nur die hintere Gehäuseschale 111 und das Innere der Maschine zu sehen ist. Im Maschinengehäuse 11 ist einstückig mit diesem ein als Bügel ausgeführter Griff 12 ausgeformt, an dessen Unterseite eine Betätigungstaste 21 zum Ein- und Ausschalten eines Elektromotors 14 angeordnet ist. Der Elektromotor 14 treibt über ein Getriebe eine Hubstange zu einer vertikalen Hubbewegung an, an deren unterem Ende ein Stichsägeblatt 22 eingespannt ist. Die elektrische Energie für den Elektromotor 14 wird wiederum von zwei Lipo-Akkus 16 zur Verfügung gestellt, die verteilt in unterschiedlichen Hohl- oder Leerräumen im Maschinengehäuse 11 angeordnet und elektrisch in Reihe geschaltet sind. Der mittels der Betätigungstaste 21 betätigbare Ein- und Ausschalter 23 ist in den Verbindungskabeln zwischen den Lipo-Akkus 16 und dem Elektromotor 14 angeordnet.

Der eine Lipo-Akku 16' ist im Bügelgriff 12 angeordnet und besteht aus insgesamt vier Akku-Elementen 17. Die Akku-Elemente 17 sind als rechteckförmige, ebene Platten ausgebildet und mit zur Luftkühlung dienendem Luftabstand zwischen sich zu einem Plattenstapel zusammengesetzt. Die einzelnen Akku-Elemente 17 sind wiederum parallelgeschaltet. Der Lipo-Akku 16" ist im oberen, vorderen Bereich des Maschinengehäuses 11 oberhalb der das Stichsägeblatt 22 tragenden Hubstange angeordnet und aus drei parallel geschalteten Akku-Elementen 17 zusammengesetzt. Jedes Akku-Element 17 wird von einer sphärisch gekrümmten Platte gebildet (Fig. 6). Die sphärische Form ist an die Kontur des Maschinengehäuses 11 oberhalb der Hubstange angepasst.

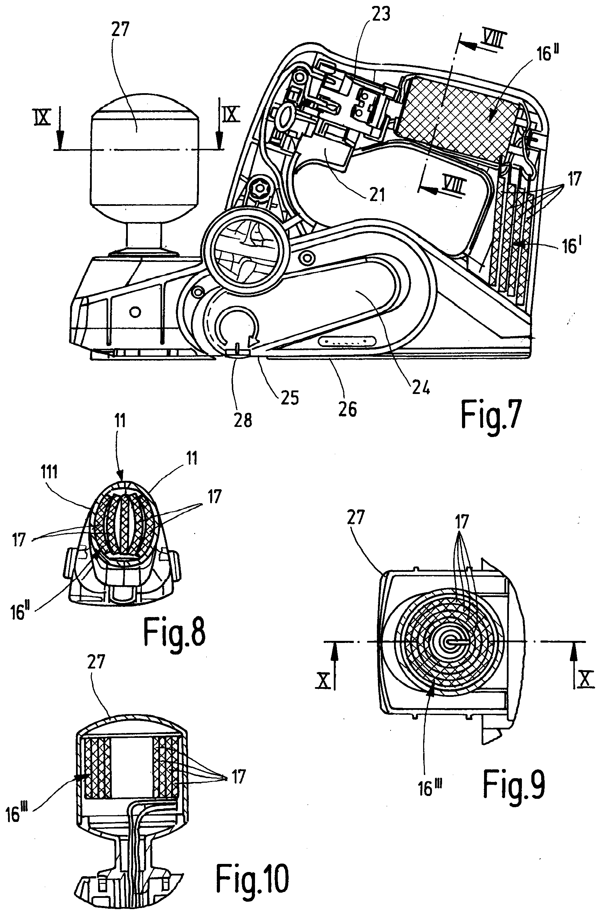

Bei dem Ausführungsbeispiel der Fig. 7 ist die elektrische Handwerkzeugmaschine als Handhobel ausgebildet. Sie weist wiederum ein zweischaliges Maschinengehäuse 11 mit hinterer Gehäuseschale 111 und vorderer Gehäuseschale 112 auf. In dem Maschinengehäuse 11 ist ein Griff 12 in Form eines Bügelgriffes ausgeformt. An der vorderen Gehäuseschale 112 ist ein Getriebegehäuse 24 angesetzt, das ein Hobelwerkzeug 28 aufnimmt. Das Hobelwerkzeug 28 tritt aus einem Schlitz 25 einer an der Unterseite des Maschinengehäuses 11 angeordneten Auflageplatte 26 heraus und steht mehr oder weniger über die Auflageplatte 26 vor. Das Vorstehmaß des Hobelwerkzeugs 28, das mittels eines am Maschinengehäuse 11 befestigten Verstellgriffes 27 einstellbar ist, bestimmt die Hobeltiefe. Der Verstellgriff 27 dient zugleich als Führungsgriff zur beidhändigen Führung des Handhobels während des Hobelvorgangs.

Im Maschinengehäuse 11 ist wiederum ein hier nicht zu sehender Elektromotor angeordnet, der über einen mittels einer an der Unterseite des Bügelgriffs 12 angeordneten Betätigungstaste 21 betätigbaren Ein-/Ausschalter 23 mit einer Energie- oder Stromversorgungsquelle elektrisch verbindbar ist. Als Stromversorgungsquelle sind wiederum mehrere Lipo-Akkus 16 vorgesehen, die in Leer- oder Hohlräumen im Maschinengehäuse 11, im Bügelgriff 12 und in dem ein separates Gehäuse bildenden Verstellgriff 27 angeordnet und elektrisch in Reihe geschaltet sind. Ein erster Lipo-Akku 16' ist in dem in Arbeitsrichtung hinteren Bereich des Maschinengehäuses 11 angeordnet und in Arbeitsstellung des Handhobels vertikal ausgerichtet. Er besteht aus insgesamt vier parallelgeschaltete Akku-Elementen 17, die in Form von rechteckigen, ebenen Platten ausgebildet und zu einem Plattenstapel zusammengefasst sind. Zwischen den einzelnen Platten des Plattenstapels sind Lufträume zum Durchführen von Kühlluft vorgesehen. Der zweite Lipo-Akku 16" ist im Bügelgriff, in Arbeitsrichtung vor dem Ein-/Ausschalter 23, angeordnet. Wie die Schnittdarstellung in Fig. 8 zeigt, ist der Lipo-Akku 16" aus insgesamt fünf Akku-Elementen 17 zusammengesetzt. Die Akku-Elemente 17 sind wiederum parallel geschaltet und als rechteckförmige Platten ausgebildet. Die mittlere, in der Längsachse des Maschinengehäuses 11 sich erstreckende Platte ist eben, während die rechts und links dieser mittleren Platte angeordneten Platten um ihre Längsachsen gekrümmt sind. Die beiden äußeren Platten sind dabei der Kontur des Bügelgriffs 12 angepasst und liegen plan an der Innenwand des Bügelgriffs 12 an. Wie die Schnittdarstellungen in Fig. 9 und 10 zeigen, ist der dritte Lipo-Akku 16''' im hohlen Innern des Verstellgriffs 27 angeordnet. Der Lipo-Akku 16''' besteht beispielhaft aus insgesamt vier hohlzylinderförmigen Akku-Elementen 17, die konzentrisch angeordnet sind und in Radialrichtung abstandslos aneinanderliegen. Die einzelnen Akku-Elemente 17 sind wiederum parallel geschaltet. Alternativ kann der Lipo-Akku 16''' auch aus einem spiralförmig aufgewickelten Streifen oder Band gebildet sein.

Wie hier nicht weiter dargestellt ist, kann der Lipo-Akku auch als Teil des Maschinengehäuses oder als Element im Maschinengehäuse ausgeführt werden. Beispielhaft kann der Lipo-Akku einen Staubabsaugstutzen bilden, der bei schleifenden oder sägenden Maschinen der Abführung des Staubs in einen Staubsammelbehälter dient. Die Innenseite des Lipo-Akkus ist vorzugsweise mit einer Gleitschicht versehen, die das Ausblasen des Staubs fördert. Durch die Ausblasluft des Staubabsauggebläses wird der Lipo-Akku gleichzeitig gekühlt. In weiteren Ausführungsformen kann der Lipo-Akku auch als Abdeckung, Deckel oder sonstiger Teil am Maschinengehäuse und/oder Griff und/oder einem am Maschinengehäuse bzw. Griff befestigten oder befestigbaren separaten Gehäuse ausgeführt oder in solchen Bauteilen implementiert werden.

In allen beschriebenen Ausführungsbeispielen der Handwerkzeugmaschine sind die Lipo-Akkus 16 in den Leer- oder Hohlräumen im Maschinengehäuse 11 bzw. im Handgriff 12 bzw. im Verstellgriff 27 unbeweglich befestigt, was z. B. durch Klemmen, Verstemmen, Verschrauben, durch Klettverbindungen, durch Kleben, Vergießen od. dgl. erreicht wird. Über die in Fig. 1 bis Fig. 10 beschriebenen Ausführungsbeispiele hinaus kann die elektrische Handwerkzeugmaschine mit Lipo-Akkus 16 auch als Delta- oder Linearschleifer, als Gartengerät, wie Rasenkantenschere, als Tacker, als Schaber, als Feinschnitt- oder Laubsäge od. dgl. ausgebildet sein, wobei die Lipo-Akkus 16 an konstruktiv bedingte und anderweitig nicht nutzbare Leer- oder Hohlräume des Maschinengehäuses 11 und/oder des Griffes 12 und/oder eines am Maschinengehäuse bzw. Griff befestigten oder befestigbaren separaten Gehäuses hinsichtlich der Abmessungen und/oder Form angepasst und in diese eingesetzt sind.

## Patentansprüche

1. Elektrische Handwerkzeugmaschine mit mindestens einem Lithium-Polymer-Akku (16), der aus metallisierten Kunststofffolien und gelartigem Polymerelektrolyt gebildet ist, **dadurch gekennzeichnet, dass** eine Form des mindestens einen Lithium-Polymer-Akkus (16) in mindestens einer Ebene an Aufnahmeräume in einem Maschinengehäuse (11) und/oder Griff (12) der elektrischen Handwerkzeugmaschine und/oder einem am Maschinengehäuse (11) bzw. Griff (12) der elektrischen Handwerkzeugmaschine befestigten oder befestigbaren separaten Gehäuse (27) zur Aufnahme des mindestens einen Lithium-Polymer-Akkus (16) maß- und formangepasst ist.

2. Handwerkzeugmaschine nach Anspruch 1, **dadurch gekennzeichnet, dass** der mindestens eine Lithium-Polymer-Akku (16) mindestens ein Akku-Element (17) aufweist, das als Streifen, Band oder Platte ausgebildet ist und eine ebene oder gebogene oder sphärisch, z.B. kugelabschnittförmig, gekrümmte Form aufweist.

3. Handwerkzeugmaschine nach Anspruch 2, **dadurch gekennzeichnet, dass** der mindestens eine Lithium-Polymer-Akku (16) als Stapel aus vorzugsweise voneinander beabstandet angeordneten Platten ausgebildet ist, die eine ebene und/oder gebogene und/oder sphärisch gekrümmte Form aufweisen und vorzugsweise elektrisch parallel und/oder in Reihe geschaltet sind.

4. Handwerkzeugmaschine nach einem der vorhergehenden Ansprüche, **dadurch gekennzeichnet, dass** der mindestens eine Lithium-Polymer-Akku (16) aus mehreren Akku-Elementen (17) zusammengesetzt ist, die gemeinsam oder einzeln gebogen oder sphärisch gekrümmt und vorzugsweise elektrisch parallel und/oder in Reihe geschaltet sind.

5. Handwerkzeugmaschine nach einem der vorhergehenden Ansprüche, **dadurch gekennzeichnet, dass** der mindestens eine Lithium-Polymer-Akku (16) eine Zylinderform, Ringform oder Mehreckform aufweist.

6. Handwerkzeugmaschine nach einem der vorhergehenden Ansprüche, **dadurch gekennzeichnet, dass** der mindestens eine Lithium-Polymer-Akku (16) als spiral- oder schraubenlinienförmig gewickeltes Band oder als Schlauch gestaltet ist.

7. Handwerkzeugmaschine nach einem der vorhergehenden Ansprüche, **dadurch gekennzeichnet, dass** der mindestens eine Lithium-Polymer-Akku (16) als Teil des Maschinengehäuses (11) und/oder des Griffes (12) und/oder des separaten Gehäuses (27), z.B. als Staubabsaugstutzen, Deckel und dgl., ausgebildet ist.

8. Handwerkzeugmaschine nach einem der vorhergehenden Ansprüche, **dadurch gekennzeichnet, dass** der mindestens eine Lithium-Polymer-Akku (16) auf zumindest einer Teilfläche eine Schutzschicht aufweist, die z.B. als mechanischer Schutzmantel oder als Gleitschicht ausgebildet ist.

9. Handwerkzeugmaschine nach einem der vorhergehenden Ansprüche, **dadurch gekennzeichnet, dass** der mindestens eine Lithium-Polymer-Akku (16) in ebener oder gebogener oder sphärisch gekrümmter Form als einzelnes Akku-Element (17) und/oder in Form zumindest eines aus mehreren Akku-Elementen (17) gebildeten Bauteils im Maschinengehäuse (11) und/oder Griff (12) und/oder einem am Maschinengehäuse (11) bzw. Griff (12) befestigten oder befestigbaren separaten Gehäuse (27) und/oder auf einem im Maschinengehäuse einliegenden Motorgehäuse (15) mit Formanpassung an jeweilige Aufnahmeräume angeordnet ist

10. Handwerkzeugmaschine nach einem der vorhergehenden Ansprüche, **dadurch gekennzeichnet, dass** mehrere Lithium-Polymer-Akkus (16) oder einzelne Akku-Elemente (17) dieser auf einzelne Frei-, Hohl- oder Leerräume im Maschinengehäuse (11) und/oder Griff (12) und/oder einem am Maschinengehäuse (11) bzw. Griff (12) befestigten oder befestigbaren separaten Gehäuse (27) verteilt und in diesen unter Anpassung an dortige jeweils vorhandene Abmessungen und/oder Formen angeordnet sind.

11. Handwerkzeugmaschine nach einem der vorhergehenden Ansprüche, **dadurch gekennzeichnet, dass** der mindestens eine Lithium-Polymer-Akku (16) im Kühlluftstrom angeordnet ist.

12. Handwerkzeugmaschine nach einem der vorhergehenden Ansprüche, **dadurch gekennzeichnet, dass** der mindestens eine Lithium-Polymer-Akku (16) kraft- und/oder formschlüssig befestigt ist.

## Claims

1. Portable electric power tool having at least one lithium polymer battery (16) that is formed from metallized plastic films and gel-like polymer electrolyte, **characterized in that** a shape of the at least one lithium polymer battery (16) in at least one plane is adapted dimensionally or in terms of shape to receiving spaces in a machine housing (11) and/or handle (12) of the portable electric power tool and/or to a separate housing (27), which is fastened or fastenable to the machine housing (11) or handle (12) of the portable electric power tool, for accommodating the at least one lithium polymer battery.

2. Portable power tool according to Claim 1, **characterized in that** the at least one lithium polymer battery (16) has at least one battery element (17) that is in the form of a strip, band or plate and has a planar or curved or spherical, for example spherical segment-shaped, shape.

3. Portable power tool according to Claim 2, **characterized in that** the at least one lithium polymer battery (16) is in the form of a stack of plates that are arranged in a manner preferably spaced apart from one another, said plates having a planar and/or curved and/or spherical shape and preferably being electrically connected in parallel and/or in series.

4. Portable power tool according to one of the preceding claims, **characterized in that** the at least one lithium polymer battery (16) is assembled from a plurality of battery elements (17), which are jointly or individually curved or spherical and are preferably electrically connected in parallel and/or in series.

5. Portable power tool according to one of the preceding claims, **characterized in that** the at least one lithium polymer battery (16) is cylindrical, annular or polygonal.

6. Portable power tool according to one of the preceding claims, **characterized in that** the at least one lithium polymer battery (16) is designed as a spirally or helically wound band or as a tube.

7. Portable power tool according to one of the preceding claims, **characterized in that** the at least one lithium polymer battery (16) is configured as part of the machine housing (11) and/or of the handle (12) and/or of the separate housing (27), for example as a dust extraction nozzle, cover or the like.

8. Portable power tool according to one of the preceding claims, **characterized in that** the at least one lithium polymer battery (16) has, on at least one area, a protective layer, which is in the form for example of a mechanical protective shell or of a sliding layer.

9. Portable power tool according to one of the preceding claims, **characterized in that** the at least one lithium polymer battery (16) is arranged, in a planar or curved or spherical form, as an individual battery element (17) and/or in the form of at least one component formed from a plurality of battery elements (17), in the machine housing (11) and/or handle (12) and/or a separate housing (27) that is fastened or fastenable to the machine housing (11) or handle (12), and/or on a motor housing (15) enclosed in the machine housing, with its shape adapted to the respective accommodating spaces.

10. Portable power tool according to one of the preceding claims, **characterized in that** a plurality of lithium polymer batteries (16) or individual battery elements (17) thereof are distributed to individual free spaces, cavities or empty spaces in the machine housing (11) and/or handle (12) and or a separate housing (27) that is fastened or fastenable to the machine housing (11) or handle (12), and are arranged therein in a manner adapted to the respective locally present dimensions and/or shapes.

11. Portable power tool according to one of the preceding claims, **characterized in that** the at least one lithium polymer battery (16) is arranged in the cooling airflow.

12. Portable power tool according to one of the preceding claims, **characterized in that** the at least one lithium polymer battery (16) is fastened in a force- and/or form-fitting manner.

## Revendications

1. Outil électrique portable présentant une ou plusieurs batteries (16) au lithium et polymère formées de feuilles en matière synthétique métallisées et d'un électrolyte polymère de type gel, **caractérisé en ce que** dans un ou plusieurs plans, la forme de la ou des batteries (16) au lithium et polymère est adaptée à la forme et aux dimensions d'espaces de réception du boîtier de machine (11) et/ou de la poignée (12) de l'outil électrique portable et/ou d'un boîtier séparé (27) qui reprend la ou les batteries (16) au lithium et polymère et qui est fixé ou peut être fixé sur le boîtier de machine (11) et/ou sur la poignée (12) de l'outil électrique portable.

2. Outil électrique portable selon la revendication 1, **caractérisé en ce que** la ou les batteries (16) au lithium et polymère présentent un ou plusieurs éléments (17) de batterie configurés en ruban, bande ou plaque et présentant une forme plane, pliée ou sphérique, par exemple la forme d'une calotte sphérique.

3. Outil électrique portable selon la revendication 2, **caractérisé en ce que** la ou les batteries (16) au lithium et polymère sont configurées comme empilement de plaques de préférence disposées à distance mutuelle, présentant une forme plane et/ou pliée et/ou incurvée sphériquement et de préférence raccordées électriquement en parallèle et/ou en série.

4. Outil électrique portable selon l'une des revendications précédentes, **caractérisé en ce que** la ou les batteries (16) au lithium et polymère sont formées de plusieurs éléments (17) de batterie pliés ou incurvés sphériquement conjointement ou séparément et de préférence raccordés électriquement en parallèle et/ou en série.

5. Outil électrique portable selon l'une des revendications précédentes, **caractérisé en ce que** la ou les batteries (16) au lithium et polymère présentent la forme d'un cylindre, d'un anneau ou d'un polygone.

6. Outil électrique portable selon l'une des revendications précédentes, **caractérisé en ce que** la ou les batteries (16) au lithium et polymère sont configurées en bande enroulée en spirale ou en hélice, ou comme manchon.

7. Outil électrique portable selon l'une des revendications précédentes, **caractérisé en ce que** la ou les batteries (16) au lithium et polymère sont configurées en tant que partie du boîtier de machine (11) et/ou de la poignée (12) et/ou du boîtier séparé (27), par exemple comme tubulure d'aspiration de poussière, couvercle ou similaires.

8. Outil électrique portable selon l'une des revendications précédentes, **caractérisé en ce que** la ou les batteries (16) au lithium et polymère présentent sur une ou plusieurs parties une couche de protection configurée comme enveloppe de protection mécanique ou comme couche de coulissement.

9. Outil électrique portable selon l'une des revendications précédentes, **caractérisé en ce que** la ou les batteries (16) au lithium et polymère en unique éléments (17) de batterie de forme plane, pliée ou incurvée sphériquement et/ou en au moins un composant formé de plusieurs éléments (17) de batterie sont disposées dans le boîtier de machine (11) et/ou la poignée (12), dans un boîtier séparé (27) qui est fixé ou peut être fixé sur le boîtier de machine (11) et/ou sur la poignée (12) et/ou sur un boîtier de moteur (15) situé à l'intérieur du boîtier de machine, leur forme étant adaptée à l'espace de réception concerné.

10. Outil électrique portable selon l'une des revendications précédentes, **caractérisé en ce que** plusieurs batteries (16) au lithium et polymère ou éléments (17) de batterie séparés de ces dernières sont répartis entre différents espaces libres, creux ou vides du boîtier de machine (11) et/ou de la poignée (12) et/ou d'un boîtier séparé (27) qui est fixé ou peut être fixé sur le boîtier de machine (11) et/ou sur la poignée (12) et sont disposés dans ces derniers en étant adaptés à leurs dimensions et/ou à leur forme.

11. Outil électrique portable selon l'une des revendications précédentes, **caractérisé en ce que** la ou les batteries (16) au lithium et polymère sont disposées dans l'écoulement d'air de refroidissement.

12. Outil électrique portable selon l'une des revendications précédentes, **caractérisé en ce que** la ou les batteries (16) au lithium et polymère sont fixées en correspondance mécanique et/ou en correspondance géométrique.
